Europäisches Patentamt

European Patent Office

Office européen des brevets

(11) Veröffentlichungsnummer : **0 063 691**
**B1**

(12) **EUROPÄISCHE PATENTSCHRIFT**

(45) Veröffentlichungstag der Patentschrift :
30.01.85

(21) Anmeldenummer : 82102138.3

(22) Anmeldetag : 17.03.82

(51) Int. Cl.⁴ : **B 65 G 51/06**, B 65 G 51/26,
G 07 D 1/00, E 05 G 5/00

(54) **Rohrpostbüchse und Rohrpoststation.**

(30) Priorität : 21.04.81 CH 2590/81

(43) Veröffentlichungstag der Anmeldung :
03.11.82 Patentblatt 82/44

(45) Bekanntmachung des Hinweises auf die Patenterteilung : 30.01.85 Patentblatt 85/05

(84) Benannte Vertragsstaaten :
AT BE CH DE FR GB IT LI LU NL SE

(56) Entgegenhaltungen :
CH-A- 261 249
DE-A- 1 531 014
DE-A- 2 703 695
US-A- 3 189 297
IBM TECHNICAL DISCLOSURE BULLETIN, Band 20,
Nr. 8, January 1978, New York, R.L. HANSEN et al.
"Media Cartridge", Seiten 3303, 3304
GELDINSTITUTE, Nr. 2, 1981, J.F. WULPILLIER "Die
Automation der ZGV-eine bemerkenswerte Alternative", Seiten 49, 50

(73) Patentinhaber : **AUTELCA AG**
Worbstrasse 187
CH-3073 Gümligen (CH)

(72) Erfinder : **Wüthrich, Werner**
Waldhausweg 14
CH-3073 Gümligen (CH)

(74) Vertreter : **Keller, Hartmut et al**
Hartmut Keller Dr. René Keller Postfach 12
CH-3000 Bern 7 (CH)

## Beschreibung

Die Erfindung betrifft eine Büchse gemäss dem Oberbegriff des Anspruchs 1 und eine Rohrpoststation gemäss dem Oberbegriff des Anspruchs 8.

Eine Büchse dieser Art ist aus « IBM Technical Disclosure Bulletin », Band 20, Nr. 8, Januar 1978, Seiten 3303/3304, bekannt. Die als tragbare Kassette ausgebildete Büchse hat einen aufklappbaren Deckel und einen Raum, in den — nach Aufklappen des Deckels — ein Stapel Banknoten zwischen einen federbelasteten Schieber und einen Trum eines ersten Förderbands eingesetzt wird. Das erste Förderband dient zum Abziehen einzelner Banknoten vom Stapel und zum Transport der einzelnen Banknoten durch einen Ausgabe-Schlitz an der Unterseite der Kassette. Unterhalb des Raums für die Aufnahme des Banknotenstapels ist ein zweites Förderband angeordnet, dessen eine Umlenkstelle an den Trum des ersten Förderbands angrenzt und das entgegengesetzt zum ersten Förderband angetrieben wird. Das zweite Förderband dient nicht zum Fördern der Banknoten sondern zum Vereinzeln ; es soll nämlich verhindern, dass mehr als eine Banknote vom ersten Förderband mitgenommen wird.

Die bekannte Büchse ist weder dazu bestimmt noch geeignet, in einer Rohrpostanlage z. B. zum Geldtransport zwischen den Schaltern und dem Tresorraum einer Bank verwendet zu werden. Für eine solche Verwendung, welche den Zweck hat, aus Sicherheitsgründen kein Geld im Schalterraum zu lagern, wäre die bekannte Büchse insbesondere deshalb ungeeignet, weil das Einsetzen eines Banknotenbündels und die Ausgabe zu kompliziert ist und zuviel Zeit erfordert.

In der Zeitschrift « geldinstitute », 1981, Nr. 2, S. 49/50, ist eine Rohrpostanlage beschrieben, die zum Geldtransport vom Tressorraum zu den Schaltern eines Geldinstituts, an denen die Kunden bedient werden, dient, wobei von den Schaltern entgegengenommenes Geld in Tresoren untergebracht wird, die im Schalterraum je neben einem der Schalter aufgestellt sind. Zur Geldausgabe wird jeweils eine leere Rohrpostbüchse auf einem Transportband zu einer Station im Tresor gefördert. Hilfsgeräte zentrieren die Büchse in der Station und öffnen ihren Deckel, um sie zur Geldaufnahme vorzubereiten. Ein vom Auftragsschalter aus gesteuerter Papiergeldausgabeautomat stellt den gewünschten Papiergeldbetrag in Form eines Papiergeldbündels bereit. Ein hydraulisch oder pneumatisch angetriebener sog. Modul ergreift das Bündel und legt es in die bereitgestellte Rohrpostbüchse. Ein ebenfalls vom Auftragsschalter aus gesteuerter Hartgeldausgabeautomat liefert den gewünschten Hartgeldbetrag, der mittels einer Rutsche in die Büchse gefüllt wird. Ein Förderer bringt die den gewünschten Betrag enthaltende Büchse zur Abgangsstation eines Fahrrohres der Rohrpostanlage, die zum Auftragsschalter führt.

Eine Büchse, die Hartgeld enthält, kann nach dem Öffnen des Deckels mit der Öffnung nach unten gedreht werden, damit das Hartgeld herausfällt. In der Regel enthält die Büchse ausser dem Hartgeld auch noch Papiergeld. Dabei ist es unvermeidlich, dass Hartgeld auf dem Transportwege beim Beschleunigen, Verzögern und auf gekrümmten Rohrwegen zwischen das Papiergeld gerät und erst beim Zählen des Papiergeldes herausfällt, was störend ist, bzw. zu Störungen beim automatischen Papiergeldzählen führt.

Die erwähnte Rohrpostanlage fördert im Tresorraum automatisch abgezähltes Geld zu den Schaltern. Um auch Geld von den Schaltern zum Tresorraum zu fördern, und dort automatisch zu verteilen, müssten die Rohrpostbüchsen im Tresorraum automatisch entleert werden. Dem standen ausser den soeben genannten noch die folgenden Schwierigkeiten entgegen : Ein automatisches Herausnehmen von Papiergeld durch einen Greifer wäre — soweit überhaupt durchführbar — umständlich und würde keine Gewähr dafür bieten, dass mehrere Geldscheine, die nicht fest oder nicht fest genug durch ein geeignetes Mittel zusammengehalten sind, restlos ergriffen werden. In der Büchse zurückgebliebenes Papiergeld würde, wenn ein Greifer beim nächsten Beschikken der Büchse ein Papiergeldbündel einlegt, weiter in die Büchse hineingestopft werden, dabei könnte es Hartgeld über lange Zeit in der Büchse festhalten und schliesslich nur mittels einer hinreichend langen und schlanken Spezialzange mit dem Risiko, es zu zerreissen, herausgezogen werden. Die dadurch verursachten Störungen im Geldannahme- und -ausgabebetrieb des Geldinstituts wären erheblich.

Hier will die Erfindung Abhilfe schaffen. Die Erfindung, wie sie im Anspruch 1 gekennzeichnet ist, löst die Aufgabe, eine Rohrpostbüchse zu schaffen, die dazu geeignet ist, in den Rohrpoststationen automatisch, auf einfache Weise, schnell und zuverlässig mit flachem Transportgut, z. B. einem Geldschein oder einem Geldscheinbündel, Wertpapieren oder anderem Schriftgut, nicht nur beladen sondern auch entladen zu werden. Gegenstand der Ansprüche 2 bis 7 sind Weiterbildungen dieser Erfindung, von denen diejenige nach dem Anspruch 4 es ermöglicht, die Büchse sowohl mit flachem Transportgut als auch zusätzlich mit stückigem Transportgut, z. B. Hartgeld, oder nur mit Transportgut einer dieser beiden Arten einfach, schnell und zuverlässig, automatisch sowohl zu beladen als auch zu entladen. Rohrpostbüchsen dieser Art können in der im Patentanspruch 8 gekennzeichneten Rohrpoststation und deren Weiterbildungen nach den Ansprüchen 9 und 10 automatisch beladen und entladen werden, wobei die Büchse dauernd in der Rohrpostanlage unzugänglich bleibt.

Die durch die Erfindung erreichten Vorteile sind im wesentlichen darin zu sehen, dass z. B. ein Papiergeldbündel nicht von einem Greifer ergriffen und in die Büchse hineingelegt, sondern von der Büchse automatisch eingezogen und auch herausgeschoben werden kann, wobei die Geldscheine eines nicht zusammengehaltenen Papiergeldbündels während des Transports der Büchse und beim Herausnehmen aus derselben unverändert zusammen bleiben, so dass keinesfalls ein oder einige Geldscheine beim Entleeren der Büchse in dieser zurückbleiben können. Bei der auch zum Transport von beispielsweise Hartgeld geeigneten Weiterbildung der Erfindung nach den Ansprüchen 4 bis 7 kann kein Hartgeld zwischen Papiergeld eindringen, und die Büchse kann mit Hart- und Papiergeld sowohl gleichzeitig beladen als auch gleichzeitig entladen werden, weil dieses stirnseitig und jenes am Büchsenumfang sowohl zugeführt als auch entnommen wird. Auch kann zum Geldwechsel von Hartgeld in Papiergeld dieses der Büchse zugeführt und jenes gleichzeitig der Büchse entnommen und zum Wechseln von Papiergeld in Hartgeld entsprechend umgekehrt verfahren werden.

Im folgenden wird die Erfindung anhand lediglich einen Ausführungsweg darstellender Zeichnungen näher erläutert. Es zeigen :

Figur 1 einen Achsenlängsschnitt einer Rohrpostbüchse mit geschlossenem Klappdeckel,

Figur 2 einen Achsenquerschnitt nach der Linie II-II in Fig. 1, mit aufgeklapptem Deckel.

Die dargestellte Rohrpostbüchse, die im folgenden insbesondere im Zusammenhang mit ihrer Verwendung zum Rohrposttransport von Papier- und Hartgeld beschrieben wird, besteht in üblicher Weise aus einem Büchsenrohr 1, an dessen Enden Kopfstücke 2 montiert sind, deren Gestaltung weiter unten näher beschrieben ist. Die Büchse ist, wie üblich, mit zwei Dichtungsringen 3 ausgerüstet, sie kann mit üblichen, nicht dargestellten Abtast-, Kontakt- und Zahlenringen zur Steuerung und Überwachung des gewünschten Weges ausgerüstet sein. (Bei der weiter unten beschriebenen, beispielsweisen Verwendung der Büchse erfolgt die Steuerung und Überwachung des Weges der Büchse auf andere Weise). In der Büchse ist ein Bandförderer mit zwei Förderbändern 4 und 5 angeordnet, die aus einem Material bestehen, das in bezug auf Papiergeld eine grosse Haftreibung hat, wie beispielsweise das unter der Markenbezeichnung « Habasit-Riemen » im Handel befindliche Material. Die Arbeitstrume 6 und 7 der Förderbänder 4 und 5 verlaufen in Büchsenlängsrichtung. Die Umlenktrommeln 8 und 9 der beiden Förderbänder 4 und 5 verlaufen dicht übereinander, sie sind mit derselben Geschwindigkeit in übereinstimmenden Richtungen — wie weiter unten erläutert — antreibbar, um der Büchse stirnseitig zugeführtes flaches Gut, z. B. Papiergeld, ein Papiergeldbündel, Wertschriften oder anderes Schriftgut durch Haftreibung zwischen die Arbeitstrume 6 und 7 in die Büchse hineinzuziehen, zwischen diesen in der Büchse bei stillstehendem Bandförderer festzuhalten und durch entsprechenden Antrieb des Bandförderers wieder aus der Büchse auszustossen, wobei die Arbeitstrume 6 und 7 zwischen den Umlenkrollen 8 und 9 an den Enden des Bandförderers entweder unmittelbar oder durch das dazwischen liegende Gut kraftschlüssig miteinander verbunden sind. Die Umlenktrommeln 8 und 9 der beiden Förderbänder 4 und 5 bilden an jedem Ende des Bandförderers ein Trommelpaar 8, 9, das in einem der Kopfstücke 2 angeordnet ist, so dass sich der Bandförderer praktisch über die ganze Büchsenlänge erstreckt. An der Stirnseite jedes Kopfstückes 2 ist eine zum Spalt des Trommelpaares 8, 9 trichterförmig verjüngte schlitzförmige Öffnung 10 gebildet. Die Trommeln 8 sind je an einer Wippe 11 gelagert, die von einer (nicht dargestellten) Feder in Richtung auf die andere Trommel 9 belastet ist, so dass sich der Spalt zwischen den Trommeln 8 und 9 der Dicke des flachen Gutes selbsttätig anpasst. Die Enden der Wellen 12 der anderen Trommel 9 sind je mit einem Glied 13 einer lösbaren, im Beispiel formschlüssigen, Wellenkupplung ausgerüstet, damit der Bandförderer mit einer sowohl in den Sende-als auch den Empfangsstationen vorzusehenden, mit einem entsprechenden Kupplungsglied ausgerüsteten Antriebsvorrichtung gekuppelt und in einer Station zum Einziehen von flachem Gut in die Büchse und in einer anderen Station zum Herausstossen des Gutes angetrieben werden kann. Die Kupplungsglieder 13 sind in Vertiefungen 14 des Büchsenrohres 1 angeordnet, so dass sie den Lauf der Büchse inden Fahrrohren der Rohrpostanlage nicht stören und in ihrer Stellung nicht beeinflusst werden können.

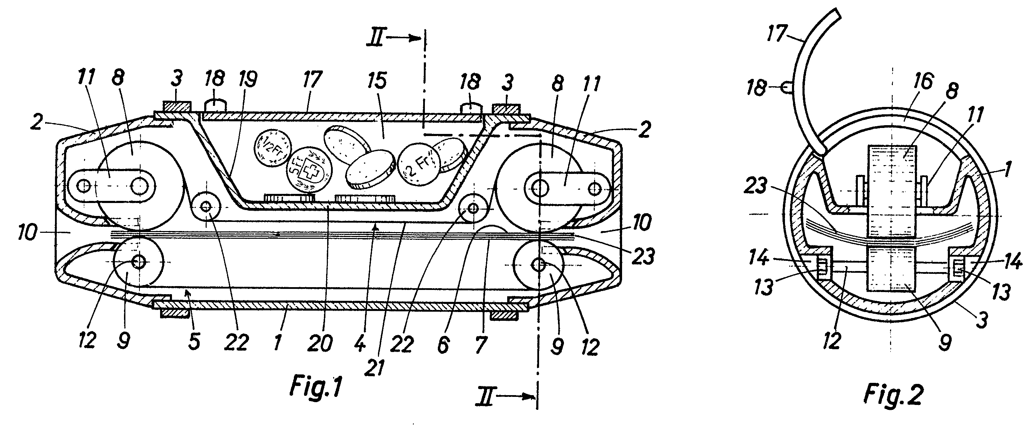

In der Büchse ist zwischen den Trommeln 8 eine Kammer 15 für stückiges Gut, z. B. Hartgeld, gebildet, die eine Öffnung 16 hat, welche durch einen Klappdeckel 17 verschliessbar ist, der von einer lösbaren (nicht dargestellten) Arretiervorrichtung in seiner Schliesslage gehalten ist, in der er einen Teil des Büchsenrohres 1 bildet. Der Klappdeckel 17 ist um eine längs einer Büchsenrohrmantellinie verlaufende Achse schwenkbar, und mit Nocken 18 versehen. Wenn die Büchse im Fahrrohrnetz einer Rohrpostanlage läuft, gleiten die Nocken 18 an der Innenseite der Rohrwand, um den Deckel 17 zusätzlich zur Arretierung durch die Arretiervorrichtung zuverlässig geschlossen zu halten. Die Wand 19 der Kammer 15 grenzt den Kammerraum gegenüber dem vom Bandförderer eingenommenen Raum ab. Um einen möglichst grossen Kammerraum 15 zu bilden, hat der Kammerboden 20 einen kleinen Abstand vom Arbeitstrum 6, und der Leertrum 21 des Förderbandes 4 ist mittels Umwegwalzen 22 auf einen die Kammer umgehenden Umweg zwischen dem Kammerboden 20 und dem Arbeitstrum 6 hindurchgeführt. Die Umwegwalzen 22 sind nachgiebig gelagert, damit sie das Förderband 4 gespannt halten, wenn eine oder beide Wippen zur Anpassung des Spaltes zwischen den Trommeln 8, 9 an die Dicke z. B. eines Papiergeldbündels, nachgeben, wobei sich die Umweglänge verändert. Um einen grösseren Kammerraum 15 zu ermöglichen, verlaufen die Arbeitstrume 6 und 7 auch nicht in der Mitte des Büchsenquerschnitts, sondern sie sind bezogen auf die Mitte des Büchsenquerschnitts in der von der Kammer 15 wegweisenden Richtung versetzt angeordnet. Die Breite der Förderbänder 4 und 5 ist so bemessen, dass die Ränder der Arbeitstrume in der Förderebene einen Abstand von der Büchsenrohrinnenseite haben, der etwas grösser als die Förderbandbreite ist, und die schlitzförmige, nach aussen trichterförmig erweiterte Öffnung 10 ist nur im Bereiche der Förderbandbreite gerade, darüber hinaus zur Ebene des Kammerbodens hin gekrümmt, so dass Papiergeld (oder auch anderes Schriftgut), dessen Breite grösser als die in der Ebene der Arbeitstrume 6 und 7 liegende Sehne des lichten Querschnitts des Büchsenrohres 1 ist, in gewölbtem Zustand in die Büchse eingeführt und darin gehalten wird, wie das Papiergeldbündel 23 in Fig. 2, das zweckmässig an der Aussenseite seiner Wölbung an einer (nicht dargestellten) Führungsfläche abgestützt ist, die in der Büchse vorgesehen ist und an den entsprechenden Rand am inneren Ende der schlitzförmigen Öffnung anschliesst.

Die Büchse hat zweckmässig am Büchsenrohr eine (nicht dargestellte) Markierung, die in einer Büchsenhaltevorrichtung der Rohrpoststationen von einer Abtastvorrichtung abgetastet wird, die einen die Büchse um ihre Längsachse drehenden Drehantrieb steuert, um die Büchse in eine Stellung zu drehen, in der die Kammeröffnung 16 zum Füllen der Kammer oben bzw. zum Entleeren unten ist.

Bei der dargestellten Büchse ist die Öffnung 10 an jeder der beiden Stirnseiten vorgesehen, so dass die Büchse an jeder Stirnseite z. B. mit Papiergeld beladen und entladen werden kann. Je nach Ausführung der Rohrpostanlage und deren Stationen, für welche die Büchse bestimmt ist, kann die Büchse auch nur an einer Stirnseite mit der Öffnung 10 versehen sein. Entsprechendes gilt für die Kupplungsglieder 13, von denen je nach Ausführung der in den Rohrpoststationen vorgesehenen Antriebsvorrichtungen für den Bandförderer auch nur ein Kupplungsglied 13 nötig sein kann.

Bei einer beispielsweisen Verwendung der beschriebenen Rohrpostbüchse für den Rohrposttransport von Papier- und Hartgeld vom Tresorraum eines Geldinstituts zu den Schaltern, an denen die Kunden bedient werden, und umgekehrt von den Schaltern zum Tresorraum, ist für jeden Schalter eine Rohrpostbüchse vorgesehen. Zur Geldentgegennahme ist am Schalter eine leere Büchse (die entweder vorher ausgezahltes Geld zum Schalter gebracht hatte, oder nach einem Geldtransport zum Tresor automatisch oder auf einen Steuerbefehl des Schalterbeamten zurückgekommen ist) in einer Haltevorrichtung so gehalten, dass sie an einer Stirnseite frei zugänglich ist. Dazu ist an der Haltevorrichtung ein Drehantrieb für die Büchse vorgesehen, der eine Abtastvorrichtung hat, welche die am Büchsenumfang angebrachte Markierung abtastet, um anzuhalten, wenn die Öffnung 16 der Büchse oben ist. In dieser Stellung der Büchse wird automatisch an eines der Kupplungsglieder 13 eine an der Haltevorrichtung angeordnete Antriebsvorrichtung für den Bandförderer gekuppelt und die Arretiervorrichtung des Büchsendeckels 17 gelöst. Der Schalterbeamte zählt das erhaltene Geld und gibt dessen Betrag mit zugehörigen Daten (Stückelung, Schalternummer, individuelles Kennzeichen für den Beamten) an eine Datenverarbeitungsanlage, er füllt vom Kunden erhaltenes Hartgeld bei von Hand oder automatisch aufgeklapptem Deckel 17 in die nun oben offene Kammer 15 und schliesst den Deckel 17 wieder, wobei die Arretiervorrichtung einrastet. Papiergeld schichtet er zu einem Bündel und führt dasselbe in die trichterförmige Öffnung 10 an der frei zugänglichen Stirnseite der Büchse. Dadurch wird der unmittelbar vor der Öffnung 10 verlaufende Lichtstrahl einer Lichtschranke unterbrochen welche die Antriebsvorrichtung in Gang setzt, so dass der Bandförderer das Papiergeldbündel zwischen den Arbeitstrumen 6 und 7 in die Büchse zieht. Wenn das Papiergeldbündel den Lichtstrahl verlässt, läuft der Antrieb danach noch entsprechend einer Förderstrecke, die dem Abstand des Lichtstrahles vom Spalt zwischen den Trommeln 8 und 9 an der Einführseite der Büchse entspricht, weiter und hält dann an. Danach wird die Kupplung automatisch ausgerückt und die Büchse zum Transport an eine dem Schalter zugeordnete Geldempfangsstelle im Tresorraum freigegeben. Während des Transports ist das Hartgeld in der geschlossenen Kammer 15 und das Papiergeldbündel fest zwischen den Arbeitstrumen 6, 7 gehalten. An der Geldempfangsstelle läuft die Büchse in eine Haltevorrichtung, in der sie automatisch so gedreht wird, dass die Öffnung 16 unten ist. In dieser Stellung der Büchse wird die Arretiervorrichtung des Deckels 17 gelöst, so dass der Deckel durch sein Gewicht nach unten aufklappt und das Hartgeld aus der Kammer 15 in eine Schale fällt, von der eine Rutsche zu einem Hartgeldsortier- und -zählautomaten führt. Gleichzeitig wird das Kupplungsglied einer an der Geldempfangsstelle angeordneten Antriebsvorrichtung an eines der Kupplungsglieder 13 gekuppelt und die Antriebsvorrichtung zum Ausstossen des Papiergeldbündels angetrieben, bis eine Lichtschranke, deren Lichtstrahl an der Ausstosseite der Büchse verläuft, darauf anspricht, dass das Papiergeldbündel die Büchse verlassen hat. Das ausgestossene Papiergeld wird von einem Automaten sortiert und gezählt. Der gezählte Hart- und Papiergeldbetrag wird zweckmässig an die Datenverarbeitungsanlage gegeben. Diese prüft, ob er mit dem vom Schalterbeamten angegebenen Betrag übereinstimmt und gibt ein entsprechendes Signal zum Schalter.

Zur Geldausgabe gibt der Schalterbeamte den gewünschten Betrag, die gewünschte Stückelung und weitere Daten an die Datenverarbeitungsanlage. Entsprechend den Daten wird im Tresorraum ein dem Schalter zugeordneter Geldausgabeautomat gesteuert, der Hart- und Papiergeld gleichzeitig in die Büchse füllt. Die Büchse wird zum Transport an den Schalter freigegeben. Sie wird am Schalter so, wie für das Entleeren im Tresorraum beschrieben, entleert, mit dem Unterschied, dass kleinere Beträge am Schalter in der Regel von Hand nachgezählt werden.

Wie ersichtlich, bleibt die Büchse dauernd in der Anlage, sie braucht nicht herausgenommen zu werden, und die Anlage kann so ausgeführt werden, dass die Büchsen nicht ohne weiteres herausgenommen werden können. Dadurch können Beschädigungen der Büchsen und der Stationen durch Fehlmanipulationen ausgeschlossen werden. (Störungen durch Bedienungsfehler können durch schaltungstechnische Massnahmen der Steuervorrichtungen verhindert werden.) Schliesslich kann ein unbefugter Zugriff verhindert werden, indem jede Station einschliesslich der von ihr aus im Tresorraum auslösbaren Vorgänge im Ruhezustand blockiert ist und nur mit Hilfe eines Schlüssels oder einer abtastbaren Kennkarte des Schalterbeamten entblockiert werden kann, deren Kennzeichen zusammen mit den Buchungsdaten bei jedem Vorgang in der Datenverarbeitungsanlage registriert wird.

Auch das am Schalter entgegengenommene Hart- und Papiergeld kann automatisch gezählt und in die Büchse gegeben werden, wobei zweckmässig nach dem Zählen zuerst der Betrag angezeigt und das Geld erst nach Betätigung einer Zustimmungstaste automatisch in die Büchse gegeben wird.

### Ansprüche

1. Büchse, insbesondere Rohrpostbüchse, mit Mitteln zum Festhalten zu transportierenden flachen Gutes (23), mindestens einer Öffnung (10) für den Durchgang des zu transportierenden flachen Gutes (23) und zwei antreibbaren Förderbändern (4, 5), die innerhalb der Büchse angeordnet sind, dadurch gekennzeichnet, dass die Mittel zum Festhalten des zu transportierenden flachen Gutes (23) bei stillstehenden Förderbändern aus den zwei Förderbändern (4, 5) bestehen, deren Arbeitstrume (6, 7) dicht übereinander in Büchsenlängsrichtung verlaufen und mit gleicher Geschwindigkeit in jeweils übereinstimmenden Richtungen antreibbar sind, um der Büchse stirnseitig zugeführtes flaches Gut (23) zwischen den Arbeitstrumen (6, 7) durch Haftreibung in die Büchse zu ziehen oder aus dieser heraus zu schieben, wobei wenigstens eine Antriebswelle (12) für den aus den zwei Förderbändern (4, 5) bestehenden Bandförderer mit einem ausserhalb der Büchse zugänglichen Glied (13) einer Wellenkupplung versehen ist.

2. Büchse nach Anspruch 1, dadurch gekennzeichnet, dass an mindestens einem Ende des sich vorzugsweise über die ganze Länge der Büchse erstreckenden Bandförderers (4, 5) dessen eine (8) der Umlenktrommeln (8, 9) an einer federbelasteten Wippe (11) gelagert ist.

3. Büchse nach Anspruch 1 oder 2, dadurch gekennzeichnet, dass wenigstens ein Ende wenigstens einer der Umlenktrommelwellen (12) an den Enden des Bandförderers (4, 5) mit dem in einer Vertiefung (14) der Büchsenwand (1) angeordneten Kupplungsglied (13) versehen ist.

4. Büchse nach einem der Ansprüche 1 bis 3, dadurch gekennzeichnet, dass ein Teil des Büchsenmantels (1) einen Deckel (17) bildet, der eine in der Büchse gebildete, von dem vom Bandförderer (4-9, 10-13) eingenommenen Raum getrennte Kammer (15) für stückiges Gut abschliesst und in Schliesslage durch eine lösbare Arretiervorrichtung gehalten ist.

5. Büchse nach Anspruch 4, dadurch gekennzeichnet, dass der Deckel um eine längs einer Büchsenmantellinie verlaufende Achse schwenkbar ist und an seiner Aussenseite zwei aus gleitfähigem Material bestehende Nocken hat, die dazu bestimmt sind, an der Innenseite der Fahrrohre der Rohrpostanlage zu laufen.

6. Büchse nach Anspruch 4, dadurch gekennzeichnet, dass der Boden der sich bis in einen mittleren Bereich der Büchsenquerschnitts erstreckenden Kammer parallel zur Förderebene des Bandförderers verläuft, und der dem Kammerboden zugewandte Leertrum (21) mittels zweckmässig federnd gelagerten Umwegwalzen (22) auf einem die Kammer (15) umgehenden Umweg geführt ist, und dass die Arbeitstrume (6, 7) in einem Abstand von der Büchsenlängsachse verlaufen.

7. Büchse nach einem der Ansprüche 1 bis 6, dadurch gekennzeichnet, dass der in der Förderebene gemessene Abstand der Arbeitstrum-Längsränder von der Büchsenmantelinnenseite grösser als die Förderbandbreite ist, und die Büchse an wenigstens einer Stirnseite einen ausserhalb des Bereiches der Förderbandbreite gekrümmten Einführungsschlitz (10) hat, dem ein Einführungstrichter zugeordnet ist.

8. Rohrpoststation für Rohrpostbüchsen nach Anspruch 1, gekennzeichnet durch eine Antriebsvorrichtung für den Bandförderer, eine Haltevorrichtung, welche die Büchse aus der Rohrpost-Rohrleitung in einer Lage aufnimmt, in der eine Stirnseite der Büchse zur Zufuhr des flachen Gutes zugänglich ist, wobei die Büchse um ihre Längsachse in eine Stellung drehbar ist, in der ein von der Antriebsvorrichtung antreibbares Kupplungsglied mit dem Kupplungsglied (13) des Bandförderers kuppelbar ist.

9. Rohrpoststation nach Anspruch 8, gekennzeichnet durch einen Drehantrieb für die Büchse, der von einer eine Markierung am Büchsenumfang abtastenden Abtastvorrichtung steuerbar ist, um die Büchse automatisch in die genannte Stellung zu drehen, und eine Lichtschranke zur Steuerung der Antriebsvorrichtung für den Bandförderer, deren Lichtstrahl vor der zugänglichen Stirnseite der in der Haltevorrichtung gehaltenen Büchse verläuft.

10. Rohrpoststation nach Anspruch 8 oder 9, für Rohrpostbüchsen nach Anspruch 4, gekennzeichnet durch Vorrichtungen, welche in der genannten Stellung der Büchse ein Lösen der Arretiervorrichtung und Öffnen des Deckels sowie ein Kuppeln der Kupplungsglieder bewirkt.

**Claims**

1. A canister, more especially a pneumatic post canister, comprising means for detaining flat material (23) that is to be transported, at least one opening (10) for the passage of the flat material (23) to be transported, and two drivable conveyor belts (4, 5) which are arranged inside the canister, characterised in that the means for detaining the flat material (23) to be conveyed consists of the two conveyor belts (4, 5) when these are stationary, the working runs (6, 7) of the conveyor belts extending closely one above the other in the longitudinal direction of the canister and being drivable at the same speed and in the same direction in order to draw flat material (23), fed frontally to the canister, into the canister between the working runs (6, 7) by adhesive friction or to push same out of this, in which respect at least one driving shaft (12) for the belt conveyor, consisting of the two conveyor belts (4, 5) is provided with a shaft coupling member (13) which is accessible outside the canister.

2. A canister according to claim 1, characterised in that at least one end of the belt conveyor (4, 5), which preferably extends the entire length of the canister, one (8) of the return drums (8, 9) thereof is mounted on a spring-loaded rocker (11).

3. A canister according to claim 1 or 2, characterised in that at least one end of at least one of the return driving shafts (12) at the ends of the belt conveyor (4, 5) is provided with the coupling member (13) arranged in a depression (14) of the canister wall (1).

4. A canister according to one of claims 1 to 3, characterised in that a part of the canister jacket (1) forms a lid (17) which seals off a chamber (15), formed in the canister and separated from the space occupied by the belt conveyor (4-9, 10-13), for lumpy material, which lid is held in the closure position by a releasable locking device.

5. A canister according to claim 4, characterised in that the lid is swingable about an axis extending along a line on the surface of the canister jacket and has, on its outside, two lugs consisting of slidable material, which are intended to run on the inside of the conveying tubes of the pneumatic-tube conveyor.

6. A canister according to claim 4, characterised in that the bottom of the chamber, which extends into a central region of the cross-section of the canister, extends parallel to the conveying plane of the belt conveyor, and the return run facing the chamber bottom is guided by means of appropriate resiliently mounted detour rollers (22) on a detour which goes around the chamber (15), and in that the working runs (6, 7) extend at a spacing from the longitudinal axis of the canister.

7. A canister according to one of claims 1 to 6, characterised in that the spacing, measured in the conveying plane, of the working-run longitudinal edges from the canister jacket inside is greater than the conveyor belt width, and the canister has, on at least one end face, an insertion slot (10) which is curved beyond the conveyor belt width and with which an insertion funnel is associated.

8. A pneumatic post station for pneumatic post canisters according to claim 1, characterised by a driving device for the belt conveyor, a retaining device which receives each canister from the pneumatic post tubing in a position in which one end face of the canister is accessible for the feed of the flat material, in which respect the canister is rotatable about its longitudinal axis into a position in which a coupling member drivable by the driving device can be coupled with the coupling member (13) of the belt conveyor.

9. A pneumatic post station according to claim 8, characterised by a rotary drive for the canister which is controllable by a scanning device, which scans a marking on the periphery of the canister, in order to rotate the canister automatically into the said position, and a light barrier, for control of the driving device for the belt conveyor, the light beam of which extends in front of the accessible end face of the canister held in the retaining device.

10. A pneumatic post station according to claim 8 or 9, for pneumatic post canisters according to claim 4, characterised by devices which effect, in the said position of the canister, a releasing of the locking device and opening of the lid as well as a coupling of the coupling members.

**Revendications**

1. Cartouche, notamment cartouche pour courrier par tube, comportant des moyens pour maintenir fermement un objet aplati (23) devant être transporté, au moins une ouverture (10) pour le passage traversant de l'objet plat (23) à acheminer, et deux bandes de convoyage (4, 5) pouvant être entraînées et disposées à l'intérieur de la cartouche, caractérisée par le fait que les moyens pour maintenir fermement, lorsque les bandes de convoyage sont immobilisées, l'objet plat (23) à acheminer, se composent des deux bandes de convoyage (4, 5) dont les brins de travail (6, 7) défilent à faible distance l'un au-dessus de l'autre dans le sens longitudinal de la cartouche et peuvent être menés à la même vitesse dans des directions respectivement coïncidentes, en vue d'attirer dans la cartouche entre les brins de travail (6, 7) et par friction d'adhérence, ou de pousser hors de cette cartouche, l'objet plat (23) délivré à ladite cartouche par sa face extrême, au moins un axe d'entraînement (12) pour le convoyeur à bandes comprenant les deux bandes de convoyage (4, 5) étant doté d'un organe (13) d'un accouplement des axes qui est accessible à l'extérieur de la cartouche.

2. Cartouche selon la revendication 1, caractérisée par le fait que, au moins à une extrémité du convoyeur à bandes (4, 5) s'étendant de préférence sur toute la longueur de la cartouche, l'un (8) des rouleaux de renvoi (8, 9) dudit convoyeur est monté sur une biellette oscillante (11) chargée élastiquement.

3. Cartouche selon la revendication 1 ou 2, caractérisée par le fait qu'au moins une extrémité d'au moins l'un des axes (12) des rouleaux de renvoi est pourvue, aux extrémités du convoyeur à bandes (4, 5), d'un organe d'accouplement (13) logé dans un renfoncement (14) de la paroi (1) de ladite cartouche.

4. Cartouche selon l'une des revendications 1 à 3, caractérisée par le fait qu'une partie de l'enveloppe (1) de cette cartouche forme un couvercle (17) qui obture une chambre (15) à objets en vrac formée dans la cartouche et séparée de l'espace occupé par le convoyeur à bandes (4-9, 10-13), et qui est maintenu en position fermée par un dispositif d'arrêt déblocable.

5. Cartouche selon la revendication 4, caractérisée par le fait que le couvercle peut pivoter autour d'un axe s'étendant le long d'une génératrice de la cartouche et possède à sa face externe deux mamelons en un matériau apte au glissement, qui sont destinés à courir le long de la face interne des tubes d'acheminement de l'installation de courrier par tube.

6. Cartouche selon la revendication 4, caractérisée par le fait que le fond de la chambre s'étendant jusqu'à une zone médiane de la section de la cartouche est orienté parallèlement au plan d'acheminement du convoyeur à bandes, et le brin inactif (21) tourné vers le fond de la chambre est dévié, au moyen de rouleaux de bifurcation (22) à montage judicieusement élastique, sur un trajet de contournement de la chambre (15) ; et par le fait que les brins de travail (6, 7) défilent à distance de l'axe longitudinal de ladite cartouche.

7. Cartouche selon l'une des revendications 1 à 6, caractérisée par le fait que la distance, mesurée dans le plan d'acheminement, entre les bords longitudinaux des brins de travail et la face interne de l'enveloppe de la cartouche est plus grande que la largeur des bandes de convoyage, et ladite cartouche comporte, au moins à une face extrême, une fente d'introduction (10) courbée à l'extérieur de la zone de la largeur des bandes convoyeuses et à laquelle est associé un entonnoir d'introduction.

8. Station pour courrier par tube pour cartouches à courrier par tube selon la revendication 1, caractérisée par un dispositif d'entraînement du convoyeur à bandes, un dispositif de retenue recevant la cartouche, en provenance du conduit tubulaire d'acheminement par tubes, dans une position dans laquelle une face extrême de ladite cartouche est accessible en vue de l'introduction de l'objet plat, ladite cartouche pouvant être amenée, par rotation autour de son axe longitudinal, à une position dans laquelle un organe d'accouplement, pouvant être mené par le dispositif d'entraînement, peut être accouplé à l'organe d'accouplement (13) du convoyeur à bandes.

9. Station pour courrier par tube selon la revendication 8, caractérisée par un entraînement de la cartouche en rotation, qui peut être commandé par un dispositif d'exploration détectant un repère sur la périphérie de la cartouche, afin de faire tourner automatiquement cette cartouche jusqu'à la position précitée, ainsi que par une barrière photo-électrique pour commander le dispositif d'entraînement du convoyeur à bandes, et dont le faisceau lumineux se trouve devant la face extrême accessible de la cartouche maintenue dans le dispositif de retenue.

10. Station pour courrier par tube selon la revendication 8 ou 9, pour cartouches de courrier par tube selon la revendication 4, caractérisée par des dispositifs qui, dans la position précitée de la cartouche, causent un déverrouillage du dispositif d'arrêt et une ouverture du couvercle, ainsi qu'un accouplement des organes d'accouplement.

Fig.1

Fig.2

0 063 691